# EUROPÄISCHE PATENTANMELDUNG

(11) **EP 2 317 122 A2**
(43) Veröffentlichungstag der Anmeldung: **04.05.2011**
(21) Anmeldenummer: 10189213.1
(22) Anmeldetag: 28.10.2010
(51) Int. Cl.: F03B 17/06

(54) **Saugrohr eines Unterwasserkraftwerks**

(30) Priorität: 30.10.2009 DE 102009051447; 19.10.2010 DE 102010048944
(71) Anmelder: KSB Aktiengesellschaft, 67227 Frankenthal (DE)
(72) Erfinder: Lahres, Werner, 64625, Bensheim (DE); Holzhüter, Erich, 69469, Weinheim (DE)

(57) **Zusammenfassung**

Die Erfindung betrifft eine Stromturbine (1), bestehend aus einem Einlaufrohr (4), einer Turbine (5) mit Generator und einem nachgeordneten auslassseitigen Saugrohr (6). Das Saugrohr dient der effektiveren Nutzung der Strömungsenergie durch Reduzierung der Austrittsverluste der Wasserströmung und muss beispielsweise für Stromturbinen von mehr als 1 MW Leistung sehr groß dimensioniert sein. Um die Handhabbarkeit des Saugrohres bei der Herstellung, dem Transport und der Montage zu verbessern, wurde es erfindungsgemäß aus einzelnen dünnwandigen Modulen (9) zusammengesetzt. Diese Module lassen sich beispielsweise in einem Baukastensystem aus faserverstärktem, diffusionsdichtem Hochleistungsbeton mit geringer Wandstärke herstellen, wodurch die geforderte Standzeit und ein wartungsfreier Betrieb unter rauen Bedingungen, insbesondere im Meerwasser, weitestgehend erreicht werden.

## Beschreibung

Die Erfindung betrifft ein abströmseitiges Saugrohr zur effektiveren Nutzung der Strömungsenergie in einem Unterwasserkraftwerk, insbesondere einer Stromturbine gemäß dem Oberbegriff des Anspruch 1.

Wasserkraftanlagen ermöglichen eine einfache Umwandlung kinetischer oder potenzieller Energie von Wasser in elektrische oder mechanische Energie, dazu wird die Turbine direkt in das Wasser eingebracht, um ihm einen Teil seiner Strömungsenergie zu entziehen.

Eine spezielle Ausführung, die so genannte Stromturbine, ist als Einheit von Einlaufrohr, Turbine, Generator und Saugrohr ausgeführt und in einem Fluss- oder Bachbett oder in einer Meeresströmung eingebracht. Der Vorteil ist, dass hier auf weitere bauliche Maßnahmen, wie beispielsweise ein Stauwehr oder Druckleitungen, verzichtet werden kann. Bei einer Stromturbine verbessert das Saugrohr die Nutzung der Strömungsenergie in der mobilen Wasserkraftanlage. Die Stromturbine kann beweglich im Wasser schwimmen, wobei sie durch eine flexible Verankerung, beispielsweise durch ein Seil, gesichert ist. Alternativ ist die Stromturbine an einem Haltemast befestigt. Um die Strömung optimal nutzen zu können, ist die Stromturbine auf dem Mast beweglich gelagert, sodass sie den Änderungen der Strömungsrichtung folgen kann.

Aus der DE 100 36 307 A1 und der DE 100 36 314 A1 sind mobile Unterwasserkraftwerke zur Energiegewinnung aus Unterwasserströmungen bekannt, wie sie etwa in den Meeren aber auch in großen Flüssen vorgesehen sind. Die beschriebenen Unterwasserkraftwerke verfügen über ein axial offenes Mantelgehäuse mit einer Einlaufpartie und einer sich diffusorartig erweiternden Auslaufpartie. Das Mantelgehäuse der Unterwasserkraftwerke ist aus Metall gefertigt, wodurch die Dimensionierung der Auslaufpartie stark eingeschränkt ist, da die Herstellung sehr teuer ist. Außerdem sind die vorgestellten metallischen Bauteile unter den rauen Umgebungsbedingungen starker Korrosion ausgesetzt.

Der Erfindung liegt die Aufgabe zugrunde, ein abströmseitiges Saugrohr zur effektiveren Nutzung der Strömungsenergie in einer Stromturbine bereitzustellen, das einfach und kostengünstig herzustellen, leicht handhabbar und dauerhaft resistent gegen Umwelteinflüsse ist.

Die Lösung dieses Problems sieht vor, dass das Saugrohr aus modularen, dünnwandigen und maßgenauen Fertigbauteilen eines faserhaltigen, hochfesten Verbundwerkstoffes hergestellt ist.

Der Wirkungsgrad einer oben beschriebenen axial durchströmten Stromturbine hängt wesentlich von der Diffusorwirkung des Saugrohres ab. Um einen wirkungsvollen Effekt zu erzielen, ist es notwendig das Saugrohr sehr groß auszulegen. Beispielsweise wird bei einem Turbinendurchmesser von acht Metern ein Saugrohr von ungefähr sechzehn Metern Länge benötigt, um eine vorteilhafte Hydraulik in der Stromturbine zu erreichen. Auslassseitig hat dieses Saugrohr einen Durchmesser von zwölf Metern. Die Stromturbine soll aber gleichzeitig noch im Wasser bewegbar sein, damit sie einer wechselnden Strömungsrichtung nachgeführt werden kann.

Die Herstellung des Saugrohrs aus modularen Fertigbauteilen ermöglicht eine Vorfertigung der einzelnen Module, die sowohl bei der Fertigung als auch beim Transport einfach handhabbar sind. Die Prozesse der Fertigteilherstellung ermöglichen Bauteile mit minimalem Materialeinsatz zu fertigen, die zudem noch maßgenau in großer Stückzahl reproduziert werden können.

Erfindungsgemäß ist vorgesehen, die Fertigbauteile, aus denen das Saugrohr aufgebaut ist, aus einem Verbundwerkstoff herzustellen. Dies ermöglicht eine Anpassung des Werkstoffes auf die speziellen Umgebungsbedingungen am Einsatzort der Stromturbine. Als Fasern eignen sich beispielsweise Glasfasern, Kohlenstofffasern, Keramikfaser, Aramidfaser, Naturfasern und Stahl- beziehungsweise Metallfasern. Die Matrix des Verbundwerkstoffes wird ebenfalls abhängig von den Umgebungsbedingungen ausgewählt. Zur Auswahl stehen Kunststoffe, wie Elastomere, Duromere oder Thermoplaste, aber auch Metalle, Keramiken, Kohlenstoff oder Zement/Beton.

Durch die geeignete Wahl der Fasern und der Matrix wird der Verbundwerkstoff duktil und unempfindlich gegenüber dem Angriff durch beispielsweise Meerwasser oder Algenbewuchs.

Je nach Kombination von Faser und Matrix erhält man Bauteile, die sich in Steifigkeit und Festigkeit, sowie in ihrer Oberflächenbeschaffenheit unterscheiden und sich auf die spezifischen Anforderungen anpassen lassen. Eine diffusionsdichte Matrix verhindert ein Eindringen von Flüssigkeit in den Verbundwerkstoff, wodurch eine Korrosion der Fasern vermieden wird.

In einer weiteren vorteilhaften Ausführungsform weisen die Module im Querschnitt eine trapezförmige Kontur auf. Von Vorteil ist dabei, dass sich aus den Modulen durch geeignete Anordnung sowohl gerade als auch gekrümmte, konische Saugrohrabschnitte herstellen lassen. Diese Kombinationsmöglichkeit ermöglicht eine Vielzahl verschiedener Geometrien, die sich aus wenigen verschiedenen Fertigteilen herstellen lassen.

In einer weiteren vorteilhaften Ausführungsform sind die Module entsprechend der Saugrohrform gekrümmt ausgebildet. Von Vorteil ist dabei, dass sich durch die Anpassung der Module beliebige Saugrohrformen realisieren lassen, wobei die Anzahl der verschiedenen Fertigteile, die zur Herstellung der Saugrohre benötigt werden klein gehalten wird. Ein weiterer Vorteil ist dabei, dass die Innenfläche des Saugrohrs mit einer kontinuierlichen Krümmung ausgeführt werden kann, womit eine unerwünschte Beeinflussung der Strömung vermieden werden kann.

In einer weiteren vorteilhaften Ausführungsform sind die Randbereiche der Module mit benachbarten Modulen verbunden. Von Vorteil ist dabei, dass die Module bei der Montage gegen Verrutschen gesichert sind. Insbesondere beim Aufbau eines Saugrohrs aus Modulen ermöglicht beispielsweise eine Nut und Feder Verbindung eine einfache Zentrierung der Module an den Stößen.

In einer weiteren vorteilhaften Ausführungsform stützen Haltemittel einen aus Modulen zusammengesetzten Saugrohrabschnitt. Von Vorteil ist dabei, dass mehrere Module durch ein gemeinsames Haltemittel gestützt werden. Die auftretenden Kräfte werden somit über den gesamten Saugrohrabschnitt verteilt. Der Abschnitt bildet dadurch in sich eine stabile Einheit.

Bei dieser Ausführungsform gibt es die Variante, bei der ein in Umfangsrichtung unterteilter Saugrohrabschnitt durch Haltemittel gestützt wird, insbesondere durch einen Haltering. Von Vorteil ist dabei, dass der Saugrohrabschnitt auf einfache Weise fixiert werden kann. Die einzelnen Module stützen sich gegenseitig zum Ring ab, so dass der Haltering lediglich ein Auseinanderfallen des Saugrohrabschnitts verhindert.

In einer weiteren Variante ist ein Saugrohrabschnitt in axialer Richtung aus einzelnen Modulen aufgebaut. Von Vorteil ist dabei, dass bei besonders langen Saugrohren die Handhabbarkeit zusätzlich verbessert werden kann. Die Module der einzelnen Längenabschnitte müssen abschnittweise auf die Ein- beziehungsweise Auslassdurchmesser angepasst werden. Bei dieser Variante ist vorgesehen, dass das aus axialen Modulen zusammengesetzte Saugrohr durch Haltemittel gestützt wird, insbesondere durch Zuganker. Von Vorteil ist dabei, dass das Saugrohr entlang seiner gesamten Länge zusammengehalten wird und Zugspannungen infolge des Eigengewichtes durch eine entsprechende Vorspannung vermieden werden.

In einer weiteren vorteilhaften Ausführungsform werden die Fasern des Verbundwerkstoffs isotrop in die Matrix eingebracht. Von Vorteil ist dabei, dass Fasern mit geringer Länge verwendbar sind. Diese Fasern, die isotrop, also nicht orientiert in die Matrix eingebracht werden, können Kräfte in alle Richtung aufnehmen. Sie werden der Matrix beigemischt und in eine Fertigteilform gegossen.

In einer weiteren vorteilhaften Ausführungsform ist bei dem Saugrohr sowohl auf der Innen- als auch auf der Außenseite eine funktionale Oberfläche vorgesehen. Von Vorteil ist dabei, dass die Struktur der Oberfläche bereits bei der Herstellung des Moduls eingearbeitet werden kann. Beispielsweise lassen sich Strukturen vorsehen, die einen Wirbelabriss begünstigen, oder die Ansiedlung von Algen oder Muscheln reduzieren.

In einer weiteren vorteilhaften Ausführungsform werden die Module aus Faserbeton hergestellt, insbesondere aus hochfestem und/oder diffusionsdichtem und/oder meerwasserbeständigem Hochleistungsfaserbeton oder Ultrahochleistungsbeton. Von Vorteil ist dabei, dass dieser Werkstoff beständig ist gegenüber der Beanspruchung im Wasser, insbesondere im Meerwasser, außerdem ist Faserbeton ein relativ preiswerter und einfach zu handhabender Werkstoff. Ein weiterer Vorteil ist dabei, dass die einzelnen Betonteile beispielsweise aus Hochleistungsbeton eine für Beton sehr geringe Wandstärke und somit eine deutlich bessere Handhabbarkeit bei Herstellung, Transport und Montage der Module erhalten. Die nachhaltige Nutzbarkeit des Materials ist durch die einfache Möglichkeit des Recyclings von Faserbeton ebenfalls erhöht.

In einer weiteren vorteilhaften Ausführungsform wird zwischen die einzelnen Module ein Dichtmittel eingebracht. Hierdurch wird verhindert, dass Kriechströme entstehen, die eventuell durch undichte Stöße zwischen den Modulen langfristig zu Auswaschungen führen könnten. Beispielsweise wird ein thixotropes oder intumeszentes Dichtmittel vor dem Verbinden der Module an der Stoßstelle aufgebracht, durch den Druck beziehungsweise die Wärme passt sich die Dichtung genau in die Stoßstelle ein.

Im Turbinenbetrieb presst der auftretende hydrostatische Aussendruck die Module des Saugrohres gegeneinander. Die einzelnen Betonbauteile, die Druckspannungen bevorzugt standhalten können, verbinden die Module zusätzlich unter dem Einfluss des Druckes. Hierdurch können Verstärkungselemente, insbesondere Fasern, in den Betonfertigteilen eingespart werden.

In einer weiteren vorteilhaften Ausführungsform sind die Module für einzelne Saugrohrabschnitte baugleich ausgeführt und verschiedene Saugrohrabschnitte bilden einen Baukasten, der auf die Durchmesserstufung der Turbinen abgestimmt ist. Von Vorteil dabei ist, dass ein Baukasten aus wenigen Modulen erstellt werden kann, aus dem sich durch entsprechende Kombination der einzelnen Module Saugrohre unterschiedlichster Längen und Durchmesser aufbauen lassen, die auf die Durchmesserabstufung der Turbinengrößen abgestimmt sind.

Weitere Ausführungsformen ergeben sich aus der Kombination der bisher dargestellten und sind deshalb hier nicht weiter ausgeführt.

Ausführungsbeispiele für die erfindungsgemäße Vorrichtung zur effektiveren Nutzung der Strömungsenergie in einer Wasserkraftanlage sind in folgenden Figuren dargestellt.

Es zeigen:
- Figur 1: eine schematische Ansicht einer Stromturbine,
- Figur 2: eine Seitenansicht eines Saugrohrs,
- Figur 3: einen Randbereich zwischen zwei Modulen,
- Figur 4: einen Querschnitt durch ein Saugrohr und
- Figur 5: ein mögliches Ausführungsdetail einer Modulverbindung.

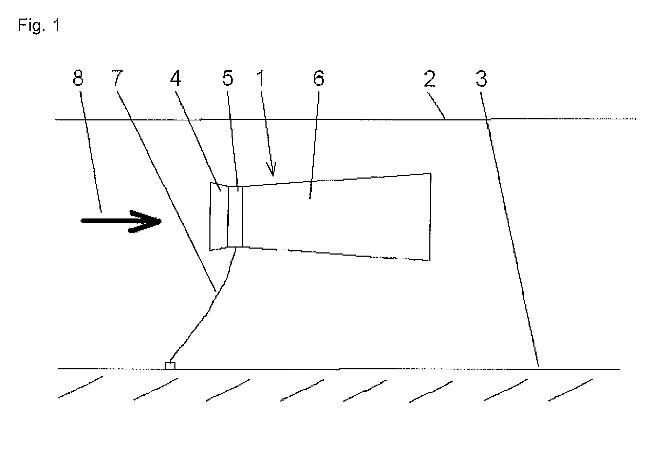

Die Figur 1 zeigt in schematischer Ansicht eine Stromturbine 1 in einem fließenden Gewässer. In Abhängigkeit von der lokalen Strömung ist die Stromturbine 1 zwischen der Gewässeroberfläche 2 und dem Gewässergrund 3 so vorgesehen, dass sie sowohl über- als auch unterströmt sein kann. Ein Stauwehr wird bei einer Stromturbine nicht benötigt. Die Stromturbine 1 besteht aus einem Einlaufrohr 4, einer Turbine 5 und einem Saugrohr 6. Zur lokalen Befestigung im Gewässer ist eine bewegliche Verankerung 7 vorgesehen, beispielhaft ist in der Figur ein Seil mit Bodenanker dargestellt, das gleichsam die elektrischen Anschlussleitungen der Stromturbine 1 umfasst. Die Strömungsrichtung 8 ist in der Figur durch den Pfeil dargestellt. Diese kann sich beispielsweise in einem tidenbehafteten Meeresabschnitt innerhalb weniger Stunden komplett ändern, weshalb eine bewegliche Lagerung der Stromturbine 1 notwendig ist, um eine Anpassung an die aktuelle Strömungsrichtung 8 zu ermöglichen.

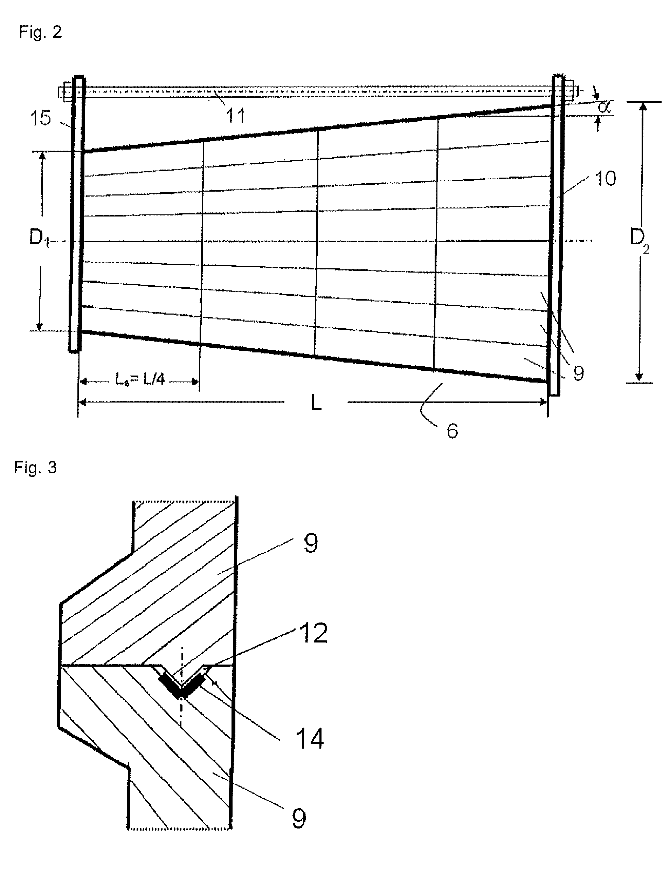

Figur 2 zeigt beispielhaft die Seitenansicht eines Saugrohrs 6, wie es bei der oben dargestellten Stromturbine 1 hinter deren Turbine zum Einsatz kommt. Ein derartiges Saugrohr 6 für eine Wasserkraftanlage im fließenden Gewässer kann sehr große Abmessungen aufweisen, um die Strömungsenergie wirksam zu nutzen. Beispielsweise kann eine Turbine mit einem Durchmesser von etwa acht Metern eine Saugrohrlänge von bis zu sechzehn Metern aufweisen. Bei einem Saugrohröffnungswinkel von sechs Grad ergibt sich ein austrittsseitiger Saugrohrdurchmesser von zwölf Metern. Dieses konische Saugrohr 6 muss vom Fertigungsort zur Baustelle gebracht werden und dort unter oft schwierigen Bedingungen eingebaut werden. Das Saugrohr 6 hat eine Länge L, einen eingansseitigen Durchmesser D1 und einen ausgangsseitigen Durchmesser D2 wobei die Querschnittsfläche in Auslassrichtung zunimmt. In der Figur ist ein konisches Saugrohr 6 dargestellt, die Erfindung lässt sich jedoch auch bei glocken- oder trompetenförmigen sowie bei nicht symmetrischen Saugrohren anwenden. Die Innen-und Außenflächen des Saugrohrs 6 sind möglichst glatt zu halten, um den organischen Bewuchs möglichst gering zu halten. Das Saugrohr 6 ist in der Länge in Module 9 unterteilt dargestellt, wobei die dargestellte Modullänge Lₛ beispielsweise ein Viertel der Gesamtlänge des Saugrohrs 6 beträgt. Lₛ=L/4. Die Modullänge Lₛ wird so gewählt, dass die Handhabung beim Aufbau des Saugrohrs 6 am einfachsten ist. Durch die Unterteilung sind die einzelnen balkenförmigen Elemente bei der Herstellung, beim Transport und bei der Montage einfach mit Standardgeräten zu verarbeiten. In der Figur sind zwei ringförmige Flansche 10, 15 dargestellt, die an den beiden Enden des Saugrohrs 6 angebracht sind. Diese Ringe dienen der Befestigung von Zugankern 11, die die Module 9 in Längsrichtung zusammenhalten. Hierdurch erhält man eine Vorspannmöglichkeit, die die durch das Gewicht des Saugrohrs 6 bedingte Biegespannung am Anschlussflansch 15 zur Turbine vermeidet. Anzahl und Länge der Zuganker 11 hängt von der mechanischen Beanspruchung durch Zugspannungen ab. Bei Bedarf lassen sich durch die Zuganker 11 gekoppelte Einheiten zu längeren Saugrohren verbinden.

Entlang des Umfangs ist das Saugrohr 6 beispielsweise in sechzehn gleich breite Module 9 unterteilt. Dies ermöglicht Saugrohre mit sehr großen Querschnittsflächen zu realisieren, die aus kleinen Einzelstücken aufgebaut sind. Bei Saugrohrdimensionen wie sie für große Wasserkraftanlagen benötigt werden, erhält man mit der dargestellten Unterteilung Bauteilgrößen, die sich auf einfache Weise auf normalen Lastkraftwagen zum Beispiel in Containern transportieren lassen. Ein Saugrohr 6, das aus meerwasserbeständigem, hochfestem, diffusionsdichten Hochleistungsfaserbeton hergestellt ist wiegt beispielsweise nur etwa ein drittel einer vergleichbaren Stahlkonstruktion und ein Vielfaches weniger als ein entsprechend stabiles Stahlbetonteil und ist somit auch einfacher transportierbar.

Der Öffnungswinkel α ist als Maß für die Diffusorwirkung des Saugrohrs 6, entsprechend den jeweiligen Anforderungen des Gesamtsystems, zu bestimmen. In der Figur ist zu erkennen, dass die Module 9 eine trapezförmige Kontur aufweisen, die die Aufweitung des Saugrohrs 6 abbildet. Die Wirkung des Diffusors wird durch eine hydraulisch glatte Beschaffenheit der Oberfläche des Saugrohrs 6 zusätzlich unterstützt.

Figur 3 zeigt einen Randbereich einer möglichen Ausführungsform der Module 9. Die Wandstärke der Module 9 nimmt im Randbereich in radialer Richtung zu, wodurch eine erhöhte Stabilität erreichbar ist. Die Module 9 sind an den Kontaktflächen durch eine Nut und Feder Verbindung 12 formschlüssig verbunden, ein Verrutschen der einzelnen Module 9 untereinander ist hierdurch verhindert. Die Nut- und Feder- Verbindung 12 vereinfacht zudem die Zentrierung der Bauteile bei der Montage des Saugrohrs 6 aus den Modulen 9. Aufgrund der hohen Maßtreue der im Standardprozess hergestellten Fertigteile ist es mithilfe dieser Konstruktion möglich die wesentlichen Kräfte über diese verbreiteten Randbereiche der Module 9 abzuleiten, sodass die inneren Flächen der Module 9 lediglich durch dünne Bereiche gebildet werden können, die einer vorteilhaften Führung der Strömung dienen. In der Fuge zwischen zwei Modulen 9 befindet sich ein Dichtmittel 14. Dieses verhindert einen Kurzschluss der Strömungen, die auf der Innen- und Außenseite des Saugrohrs 6 verlaufen.

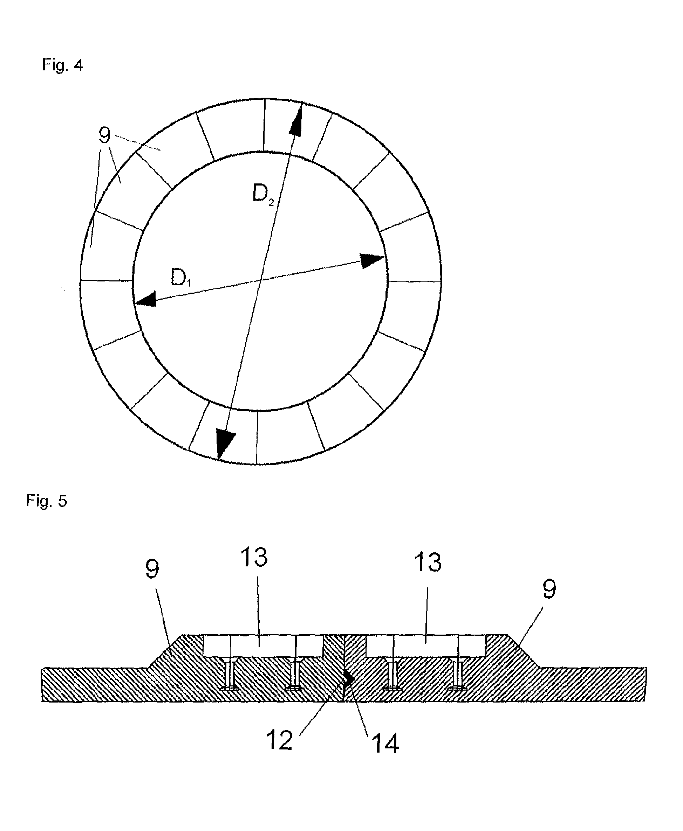

Figur 4 zeigt eine Ansicht des Saugrohrs 6 in Querschnittsrichtung mit der Unterteilung in Umfangsrichtung. Zur Vereinfachung ist die Unterteilung in Längsrichtung nicht dargestellt. D1 zeigt den kleineren Durchmesser der Eingangsseite, D2 den größeren Durchmesser der Ausgangsseite. In der Figur ist deutlich die Krümmung der Module 9 in Umfangsrichtung zu erkennen.

Figur 5 zeigt ein Ausführungsbeispiel für die Verbindung zweier Module 9. Zusätzlich zur Nut- und Feder Verbindung 12 verfügen die Module 9 in den Randbereichen über eingelassene Ankerschienen 13. Diese Ankerschienen 13 werden bereits bei der Fertigung der Module 9 eingearbeitet und sind fest mit dem jeweiligen Modul 9 verbunden. Die benachbarten Module 9 werden zur einfacheren Montage durch ein nicht dargestelltes Verbindungselement verbunden, das durch Ankerschrauben an den Ankerschienen 13 befestigt wird.

### Bezugszeichenliste

- 1: Stromturbine
- 2: Wasseroberfläche
- 3: Gewässergrund
- 4: Einlaufrohr
- 5: Turbine
- 6: Saugrohr
- 7: Verankerung
- 8: Strömungsrichtung
- 9: Modul
- 10: Flansch
- 11: Zuganker
- 12: Nut und Feder Verbindung
- 13: Ankerschienen
- 14: Dichtmittel
- 15: Anschlussflansch
- L: Länge des Saugrohres
- Lₛ: Länge des Moduls
- D1: Eintrittsdurchmesser
- D2: Austrittsdurchmesser
- α: Öffnungswinkel

## Patentansprüche

1. Abströmseitiges Saugrohr zur effektiveren Nutzung der Strömungsenergie in einem Unterwasserkraftwerk, insbesondere einer Stromturbine,
**dadurch gekennzeichnet, dass**
das Saugrohr (6) aus modularen, dünnwandigen und maßgenauen Fertigbauteilen eines faserhaltigen, hochfesten Verbundwerkstoffes hergestellt ist.

2. Saugrohr nach Anspruch 1, **dadurch gekennzeichnet, dass** die Fasern aus Glasfasern, Kohlenstofffasern, Keramikfaser, Aramidfaser, Naturfasern und Stahlbeziehungsweise Metallfasern bestehen.

3. Saugrohr nach Anspruch 1 oder 2, **dadurch gekennzeichnet, dass** die Matrix des Verbundwerkstoffes aus Elastomeren, Duromeren, Thermoplasten, Metallen, Keramiken, Kohlenstoff oder Zement/Beton besteht.

4. Saugrohr nach Anspruch 1, 2 oder 3, **dadurch gekennzeichnet, dass** die Fertigbauteile im Querschnitt eine trapezförmige Kontur aufweisen.

5. Saugrohr nach einem der Ansprüche 1 bis 4, **dadurch gekennzeichnet, dass** die Fertigbauteile entsprechend der Saugrohrform einfach oder doppelt gekrümmt ausgebildet sind.

6. Saugrohr nach einem der Ansprüche 1 bis 5, **dadurch gekennzeichnet, dass** die Randbereiche der Fertigbauteile mit benachbarten Fertigbauteilen verbunden sind.

7. Saugrohr nach einem der Ansprüche 1 bis 6, **dadurch gekennzeichnet, dass** Haltemittel einen aus Fertigbauteilen zusammengesetzten Saugrohrabschnitt stützen.

8. Saugrohr nach einem der Ansprüche 1 bis 7, **dadurch gekennzeichnet, dass** die Fasern des Verbundwerkstoffs isotrop in die Matrix eingebracht werden.

9. Saugrohr nach einem der Ansprüche 1 bis 8, **dadurch gekennzeichnet, dass** bei dem Saugrohr (6) eine funktionale Oberfläche vorgesehen ist.

10. Saugrohr nach einem der Ansprüche 1 bis 9, **dadurch gekennzeichnet, dass** die Fertigbauteile aus Faserbeton hergestellt werden, insbesondere aus hochfestem und/oder diffusionsdichtem und/oder meerwasserbeständigem Hochleistungsfaserbeton oder Ultrahochleistungsbeton.

11. Saugrohr nach einem der Ansprüche 1 bis 10, **dadurch gekennzeichnet, dass** zwischen aneinander liegenden einzelnen Fertigbauteilen ein Dichtmittel (14) eingebracht ist.

12. Saugrohr nach einem der Ansprüche 1 bis 11, wobei Fertigbauteile für einzelne Saugrohrabschnitte baugleich ausgeführt sind und verschiedene Saugrohrabschnitte einen Baukasten bilden.

13. Stromturbine zur Energiegewinnung aus einem strömenden Gewässer, **dadurch gekennzeichnet, dass** sie mit einem Saugrohr nach einem der Ansprüche 1 bis 12 versehen ist.
